# EUROPEAN PATENT SPECIFICATION

(11) **EP 2 329 069 B1**
(45) Date of publication and mention of the grant of the patent: **30.11.2011**
(21) Application number: 09800026.8
(22) Date of filing: 06.07.2009
(51) Int. Cl.: D02G 3/12, D02G 3/44

(54) **YARN FOR CAR SEAT HEATING WITH SUITABLE LUBRICANT**
GARN FÜR AUTOSITZHEIZUNG MIT GEEIGNETEM SCHMIERMITTEL
FIL POUR CHAUFFAGE DE SIÈGE DE VOITURE COMPRENANT UN LUBRIFIANT APPROPRIÉ

(30) Priority: 22.07.2008 EP 08160846
(43) Date of publication of application: 08.06.2011
(73) Proprietor: NV Bekaert SA, 8550 Zwevegem (BE)
(72) Inventor: AMILS, Xavier, B-8500 Kortrijk (BE); VANBRABANT, Johan, B-8550 Zwevegem (BE)
(74) Representative: Messely, Marc
(86) International application number: PCT/EP2009/058513
(87) International publication number: WO 2010/009972

(56) References cited:
- EP-A- 1 362 941
- US-A- 2 977 748
- US-A- 3 807 026
- US-A- 4 983 814

## Description

### Technical Field

The present invention relates to a yarn for car seat heating comprising one or more bundles of metal fibres and to its various uses.

### Background Art

Yarns comprising one or more bundles of metal fibres are known. Reference can e.g. be made to WO-A-2006/120045 in this respect. Such yarns are e.g. applied in vehicle seat heating systems or heatable textiles. In these applications, the yarns are used as an electrical resistance and provided, in use, with an electric current to obtain the required heating effect. In many of the applications of such yarns, the yarns are subjected to different stress and/or strain conditions. In particular, the yarns may be repeatedly loaded under tensile and/or bending or torsion stresses, e.g. when applied in a car seat heating. When repeatedly subjected to such stresses, metal fibres of the yarn may break, eventually resulting in the failure of the yarn. As a result, the yarn may no longer provide its function as a heating element in e.g. a car seat heating.

In general, there is a desire to increase the life time of systems or components. In case of the application of yarns comprising bundles of metal fibres, the life time of the yarn is affected by its resistance against repeated bending, which is generally called the flexlife. Therefore, in order to improve the life time of yarns comprising one or more bundles of metal fibres, it is an object of the present invention to design a yarn having an improved resistance against bending and/or fretting and/or wear, which improved resistance is called an improved flexlife. Within the meaning of the present invention, flexlife is to be understood as "the resistance to rupture of the yarn under repetitive bending conditions".

EP-A-1362941 discloses an electrically conductive yarn comprising stainless steel fibers, the stainless steel fibers having a specific electrical resistance are coated with a metal coating consisting of a metal material having a specific electrical resistance being smaller than the stainless steel electrical resistance. The purpose of the invention is providing a metal electrically conductive yarn with a reduced electrical resistance per linear meter and an expected flexibility.

### Summary of the Invention

According to the invention, this object is achieved by a yarn for car seat heating comprising one or more bundles, each bundle comprising at least ten, preferably at least thirty metal fibres, said yarn being twisted, characterized in that said yarn comprises a solvent-based lubricant, said lubricant comprising a polymer binder and solid particles.

The application of a lubricant may result in a reduction of the friction coefficient. As such, lubricants are e.g. applied to reduce the friction of screws. US 2,977,748 describes a lubricated ferrous wire rope wherein the individual wires are provided with a lubricant. It is also known to apply e.g. oil based lubricants to yarns of metal fibres to reduce the friction coefficient thereof. In this respect, it can be noted that an improved flexlife of approx. 50% has been observed when an oil-based lubricant is applied.

However, in order to be applied for car seat heating, the use of an oil based lubricant is preferably avoided as it may e.g. cause skin irritation or may cause stains in the clothing of an occupant of the car.

Therefore, in the present invention, a particular lubricant is applied that has been found to be advantageous for an application in car seat heating. In addition to being advantageous for car seat heating, the use of the selected lubricant has been found to result in an important improvement of the flexlife of the yarn.

The application of an oil based lubricant also improves the flexlife. However, when a solvent based lubricant comprising a polymer binder and solid particles is applied, as in the present invention, the flexlife improvement can be much higher. Experiments have shown a flexlife increase of up to 300 % compared to yarns without lubrication.

The types of lubricants applied in the context of the present invention not only increase the flexlife but are selected to be particularly suitable for car seat heating. This means that the lubricants are biocompatible or do not irritate the skin, not staining, stable up to at least 100 °C, can be cold applied, have rapid drying times, are applicable on a stainless steel surface, improve lubrication, are water proof and increase the resistance to corrosion.

In order to be applied in e.g. a heating element for a car seat heating, the yarns should be able to conduct an electric current. Electrically conductive yarns are e.g. described in US 4,983,814. In this particular example, a fibrous heating element comprises a core fiber of multi folded polyester yarn and electrical conductive layers of a polyurethane polymer having carbonaceous particles dispersed therein formed to cover the core fiber. The mechanical strength of these fibrous heating elements is provided by the polyurethane resin which is preferably cross-linked and which needs to have a thickness preferably between 20 and 700µm. Each individual coated yarn is used as a heating element, wherein the heating is generated in the coating layer.

In general, all metal fibres (metal being understood as encompassing both metals and metal alloys) can be considered to conduct an electric current. As such, the fibres as applied in the yarns according to the invention may e.g. be made from stainless steel, copper or copper alloys. Other embodiments of fibres as applied in yarns according to the present invention may comprise multiple components; as such, they may e.g. comprise both copper and stainless steel. By applying such a fibre, advantage can be made of the properties of both the copper and the stainless steel. Such fibres thus combine the favourable strength properties of stainless steel and the electrical resistance properties of copper.

The bundle or bundles of the yarns according to the present invention are preferably obtained by a bundle-drawing process. Such a process is generally known and involves the coating of a plurality of metal wires (a bundle), enclosing the bundle with a cover material, drawing the bundle to the appropriate diameter and removing the cover and coating material of the individual wires (fibres) and the bundle, as e.g. described in US 3,379,000; US 3,394,213; US 2,050,298 or US 3,277,564. Compared to grouping a plurality of single-drawn fibres together to form a bundle, the bundle-drawn process allows the fibre diameter to be reduced further. It has been observed that a reduced fibre diameter also has a positive effect on the flexlife.

The metal fibres as applied in the bundles of the yarns according to the invention can be single drawn or bundle drawn. A description of bundle drawing is provided above. For a single drawn fibre the diameter reduction is done by means of a series of dies for one fibre. For bundle drawn fibres the diameter reduction is done by means of a single series of dies for the whole bundle. In case of the bundle drawing operation, the cross section of a fiber has usually a pentagonal or hexagonal shape as shown in figure 2 of US2050298, and the circumference of the fiber cross section is usually serrated as opposed to a single drawn fiber, which has a circular cross section.

With respect to the yarns being twisted, such twisting can be done either on the individual bundle or bundles of the yarn but equally on the bundles taken together (the bundles of the yarn can be twisted and/or the fibres of a bundle can be twisted).

According to an embodiment, the yarn according to the present invention comprises a predetermined number of torsions per meter, said predetermined number of torsions per meter being smaller than 80 per meter and larger than 10 per meter.

In an embodiment of the present invention, the yarn is twisted with a comparatively small number of torsions per meter, less than 100, preferably less than 80. In yarns of the prior art, a much higher number of torsions per meter is usually applied in the yarn in order to obtain the various elements of the yarn (i.e. the fibres of the bundle or the bundles) remaining closely together. In order to keep the different elements of the yarn from spreading too far apart, it has been observed that a minimum number of approx. 10 torsions per meter is sufficient. Preferably, the number of torsions per meter is between 30 and 60 torsions per meter. It has been observed that the application of the preferred ranges of torsions per meter to either the individual bundle or bundles of the yarn or on the bundles taken together may result in a further improvement of the flexlife of the yarn.

In a preferred embodiment of the present invention, the lubricant may further comprise additives for corrosion inhibition or wetting agents or UV dyes.

### Brief Description of Figures

Figure 1 schematically shows a cross-sectional view of a yarn according to the present invention;

Figures 2a and 2b schematically illustrate two possible ways of twisting multiple bundles about one another to obtain a yarn according to the present invention;

Figure 3 schematically illustrates the average flexlife of a yarn as a function of lubrication;

Figure 4 schematically illustrates the application of a yarn according to the present invention as a heating element for a car seat.

### Description

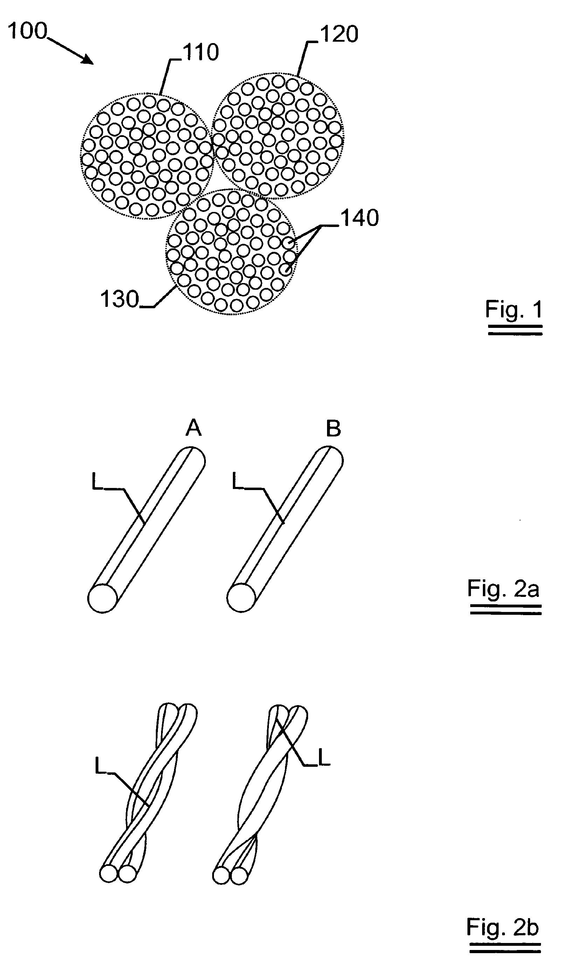

Yarns according to the present invention comprise one or more bundles of metal fibres, each bundle comprising at least 10 metal fibres, e.g. at least 30 metal fibres. Figure 1 schematically depicts a cross-sectional view of a yarn 100 according to the present invention. The yarn 100 comprises three bundles 110, 120 and 130 each comprising more than 30 metal fibres 140. The yarn according to the present invention may also comprise non-metallic fibres, e.g. the yarn may be a blend of metallic fibres and textile fibres.

In the present invention, metal is to be understood as encompassing both metals and metal alloys (such as stainless steel) or compositions. As an example, the metal fibres as applied in the present invention may comprise stainless steel or a stainless steel core enclosed by copper or a copper alloy. Said stainless steel fibres are preferable provided out of AISI 300 series such as AISI 302, 304, 316 or 316L, or AISI 400 series such as AISI 430, AISI 625 or AISI 904. Alternatively, the metal fibres as applied in a yarn according to the present invention may have a copper core surrounded by a stainless steel mantle. Such fibres provide improved electrical properties combined with the corrosion and oxidation resistance of stainless steel.

With respect to the yarns being twisted, such twisting can be done either on the individual bundle or bundles of the yarn but equally on the bundles taken together (the bundles of the yarn can be twisted and/or the fibres of a bundle can be twisted).

As such, a yarn according to the present invention encompasses the following examples:
1. A yarn comprising one single bundle comprising 1000 fibres, the bundle having e.g. 120 torsions per meter.
2. A yarn comprising two bundles, each comprising 275 fibres, the bundles being twisted with one another with e.g. 120 torsions per meter.

With respect to the second example, the bundles can either be twisted on their own as well (e.g. having 120 torsions per meter as well) or can be substantially untwisted.

The yarns according to the present invention further comprise a solvent based lubricant. For car seat heating, the applied lubricants are preferably biocompatible - non irritating, and not staining. As such, oil based lubricants are less favourable as they may cause irritation or stains. The lubricant as applied in yarns according to the present invention comprises a polymer binder and solid particles. The application of such a lubricant results in a non-irritating, non staining film on the yarn.

The solid particles can e.g. be selected from a group consisting of metal oxides, molybdene disulphide, PTFE and graphite. When included in the lubricant, said particles turn out to provide the most significant increase of the flexlife of the yarn. The polymer binder of the lubricant as applied in the yarns according to the invention can e.g. comprise high molecular polymers such as polyamide or a resin such as polyurethane.

As a solvent, water or organic solvents can be applied.

When high molecular polymers are applied as polymer binders, the lubricant can be applied to the yarn by immersion or by painting. By immerging (or dipping) the yarns in the lubricant, the lubricant can fill, at least partly, any gaps between the metal fibres of the yarns and adhere to the fibres. The yarns may thereafter be dried, in order to substantially remove the solvent. After the drying process, the lubricant may form a dry, non-greasing film onto the yarn. Drying of the yarn can e.g. be achieved by air at room temperature. The drying process can be accelerated by using forced air or at higher temperatures.

When resins are applied as polymer binders, the lubricant may equally be applied to the yarn by immersion, by spraying or painting.

In addition to being non-irritating and non staining, it has been observed that the lubricants as applied in the present invention are stable up to at least 100 °C.

Further advantages of the lubricants as applied to yarns according to the invention are that they can be cold applied and may have a short drying time.

Several additives can be applied in the lubricant to further improve the properties of the yarn for car seat heating. Examples of suitable additives are corrosion inhibitors, wetting agents, UV dyes or anti-aging additives.

The metal fibres as applied in the yarns according to the present invention preferably have an equivalent diameter being less than 50 micrometer, but more than 0.5 micrometer, preferably between 1 micrometer and 35 micrometer, yet preferably between 7 and 21 micrometer. The equivalent diameter of a fibre is to be understood as the diameter of an imaginary circle, having the same area as the cross section of the fibre, or explained differently, the diameter of an imaginary circle having a surface area equal to the surface area of the radial cross section of the fiber.

The bundles of fibres as applied in the yarns according to the present invention can be obtained from a bundle-drawing process. The latter process may advantageously be applied as it enables the manufacturing of thinner fibres compared to a single-drawn process. In addition, the bundle-drawing process can be considered a more economical process as it results in a plurality of fibres being obtained at the same time. With respect to bundle drawing of metal fibres, reference can be made to US 3,394,213; US 2,050,298 or US 3,277,564. Using the bundle-drawing process, metal fibres are obtained by reducing the diameter of a plurality of metal filaments or wires. Such a bundle-drawing process can involve the following steps:
1. Coating or enclosing a metal wire (the wire that is to become the metal fibre) with a coating metal having a lower acid resistance than the metal wire.
2. Grouping a plurality of said coated metal wires together as a bundle and enclosing them by a cover material (e.g. the same material as used to cover the individual wires) thereby obtaining a composite wire. The cover material as applied to the bundles of wires is also referred to as the matrix material.
3. Drawing the composite wire to a final diameter by wire drawing operation by means of a series of subsequent cross-section reductions, if necessary including one or more intermediate annealing steps.
4. The cover (or matrix) material and the coating material are then removed from the composite wire. This step may e.g. involve the application of an appropriate acid such as nitric acid or sulphuric acid to the cover material in order to dissolve it, possibly assisted by using electrochemical processes. As a result, a bundle of metal fibres is obtained.

Suitable cover materials for the metal wires that form the starting material for the fibres are e.g. iron or copper. A suitable cover material to enclose both the individual wires and the bundle can e.g. be soft steel such as S10C. Such a cover material can e.g. be applied to obtain bundles of stainless steel such as SUS 304.

Preferably, a bundle of bundle-drawn fibres comprises no more than 2000 fibres, preferably between 10 and 2000 fibres, e.g. between 30 and 1500 fibres.

In a preferred embodiment of the present invention, composite wires as obtained in step 3 are twisted (e.g. 120 torsions per meter) in order to obtain a yarn according to the invention. By twisting the bundle or bundles of the yarn prior to the step of removing the cover material the different fibres within a bundle or the different bundles within the yarn will be able to, to some extent, displace relative to each other once the cover material is removed. Phrased differently, the different fibres or bundles of the yarn are to some extent loose with respect to each other. Removing of the cover material can e.g. be achieved by an etching process or the like. When the metal fibres of the bundle or bundles of the yarn are to some extent loose with respect to each other, this may facilitate the application of a lubricant. Due to the loose structure, the lubricant is introduced more easily to the yarn, thereby accelerating the lubrication process.

The metal fibres as applied in the yarns according to the present invention may comprise a core of a material having a higher electric conductivity compared to steel or steel alloys. Preferred materials for forming such a core are copper or copper alloys or aluminium.

When such materials are to be used for forming the metal fibres, bundles of such materials may equally be obtained by grouping a plurality of single-drawn wires or filaments, or, preferably, using a bundle-drawing process. In the latter case, the bundle-drawn process may require additional steps.

As explained above, prior to the drawing of the bundle of metal wires, the wires are coated or enclosed by a material having low acid resistance, said material being removed after the drawing of the bundle to a final diameter. When e.g. copper or a copper alloy is used as wire material, care should be taken to ensure that said wire is substantially not affected when the cover material is removed. In order to achieve this, the wire material (e.g. copper) can be coated with a high acid resistance material (e.g. stainless steel) prior to the coating with the low acid resistance material. As such, a bundle of metal fibres having a copper or copper alloy core and a mantle of e.g. stainless steel can be obtained. In a preferred embodiment, the stainless steel mantle may comprise AISI 316L steel or AISI 625 or AISI 904.

Said bundles may advantageously be applied in yarns according to the present invention for such applications where the electrical conductivity is important, such as electrical heating applications. Such applications can e.g. include heatable textiles wherein the electrically conductive yarn functions as a resistive heating element. Such textiles can e.g. be part of a heating device which is integrated in a car seat, usually between a foamed part of the seat and the seat upholstery.

A further application where the electrical conductivity is important and where the yarns according to the invention may advantageously be applied is the use as leadwire connecting different electronic devices to each other such as batteries, PCB's or monitoring devices.

With respect to the above described processes, reference can be made to JP-A- 5-177243 and WO-A-2006/120045 describing a bundle-drawing process for obtaining metal fibres with multiple layers.

Preferable, the yarn according to the invention is twisted with a comparatively small number of torsions per meter, less than 100, preferably less than 80. Either the individual bundles (e.g. obtained by a bundle-drawing process or by combining single drawn fibres) can be twisted or the bundles taken together can be twisted. In order to keep the different elements of the yarn from spreading too far apart, it is preferred to have a minimum number of approx. 10 torsions per meter. Preferably, the number of torsions per meter is between 30 and 60 torsions per meter as applied to the yarn. It has been observed that the application of the preferred ranges of torsions per meter to either the individual bundle or bundles of the yarn or on the bundles taken together may result in a further improvement of the flexlife of the yarn. Furthermore, it has been observed that the flexlife improvement increases when the number of torsions per meter as applied decreases.

It is contemplated that the application of a comparatively small number of torsions per meter results in a yarn wherein the metal fibres of the bundle or the bundles themselves are to some extent loose with respect to each other. It is believed that, due to the loose structure, the lubricant can be introduced more easily to the yarn. This may result in an acceleration of the lubrication process. Assuming the application of the preferred ranges of torsions per meter facilitates or accelerates the lubrication process, it can be acknowledged that this may equally be applied to reduce the time it takes to lubricate the yarn. As an example, when the lubricant is applied using an immersion process, the yarn may be immersed over a shorter period of time. As such, when the preferred number of torsions per meter is applied in a yarn according to the invention, this may result in a reduced manufacturing time for such a yarn.

When two or more bundles are applied in embodiments of the yarns according to the present invention, different options exist for twisting the different bundles about one another. Two options are illustrated in figures 2a and 2b.

Figure 2a schematically depicts two bundles A and B and a fibre L of said bundles, the fibre being located on the circumference of the bundle. One way of twisting the different bundles A and B is by bending the bundles about each other, substantially without applying any torsion on the individual bundles. As such, the twisting of the two or more bundles does not result in a (additional) twisting of the individual bundles. This is illustrated on the left side of figure 2b. As can be seen, fibre L substantially remains in the position relative to the other fibres of the bundle. The individual bundles as applied in the yarns according to the present invention can therefore either be twisted or untwisted. This process is sometime referred to as "cabling" and can be carried out by means of tubular twisting machines.

As an alternative, the bundles of the yarns can be twisted by applying a torsional force on the two or more bundles. By doing so, the individual bundles are also twisted on their own. This is illustrated on the right side of figure 2b. This process is sometimes referred to as "bunching" and can be carried out by double-twisting machines.

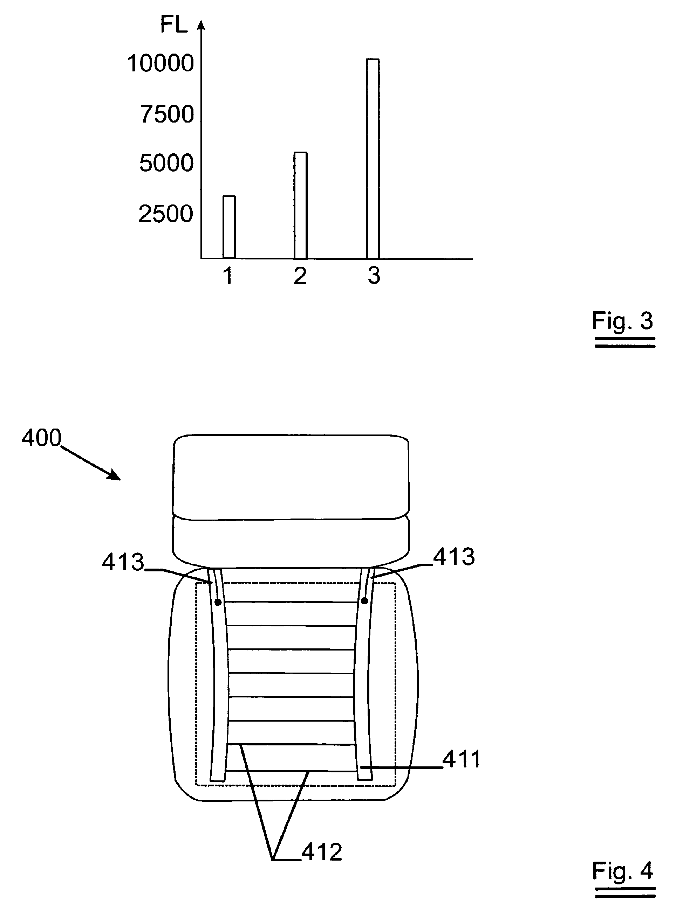

The improved flexlife as obtained by yarns according to the present invention is illustrated in figure 3. Figure 3 schematically indicates the measured mean flexlife FL (expressed as a number of bending cycles applied to the yarn prior to rupture) of a yarn in three different situations:
(1) without lubrication
(2) with oil based lubrication
(3) with solvent based lubricant comprising a polymer binder and solid particles.

As can be seen on the graph, compared to the situation where no lubrication is applied, an oil based lubrication may provide an improvement of approx. 50 %. When a solvent based lubricant comprising a polymer binder and solid particles is applied, an increase in flexlife of approx. 300 % can be realised, as illustrated in the graph.

The flexlife of a yarn can be determined by subjecting a sample length of the yarn to a repeated bending under an axial load. The bending degree in such a test is generally taken as 90°. During the test, a micro-current is arranged to run through the yarn sample, the yarn sample forming part of an electrical circuit. Once all metal fibres of the sample are broken, the electric circuit is also broken and the counting of the number of bendings (or cycles) is stopped.

Yarns according to the present invention are applied as a heating element for a car seat. This is illustrated in figure 4. Figure 4 schematically shows a car seat 400 provided with a textile product comprising yarns accordance with the present invention as electrode 411. Yarns 412 may be coupled to an electric device (not shown) that is arranged to provide, in use, the required current to the textile product by means of two cables 413, each being coupled to an electrode 411 to which the yarns 412 are coupled. This embodiment is known as the parallel embodiment where the invention yarns function as electrode. A series embodiment is also possible where the invention yarns function as the heat-resistive elements.

Although various specific applications of the yarns according to the invention are mentioned, the present invention is in no way restricted to the applications mentioned. In particular, the preferred embodiment wherein the bundles of the yarn provide a loose structure may equally be obtained using other manufacturing methods as the methods described. With respect to the application of the lubricant, other methods apart from immersion or spraying may equally be applied.

The invention is not limited to the above described embodiments thereof, wherein many modifications are conceivable within the scope of the appended claims.

## Claims

1. A yarn (100, 412) for car seat heating comprising one or more bundles (110, 120, 130), each bundle (110, 120, 130) comprising at least ten metal fibres (140), said yarn (100) being twisted,
**characterized in that**
said yarn (100) comprises a solvent-based lubricant, said lubricant comprising a polymer binder and solid particles.

2. The yarn according to claim 1, wherein said metal fibres (140) are single-drawn or bundle-drawn.

3. The yarn according to claim 1 or claim 2, wherein said yarn (100) comprises a predetermined number of torsions per meter, said predetermined number of torsions per meter being smaller than 80 per meter and larger than 10 per meter.

4. The yarn according to claim 3, wherein said predetermined number of torsions per meter is smaller than 60 per meter and larger than 30 per meter.

5. The yarn according to any preceding claim, wherein said lubricant further comprises an additive for corrosion inhibition.

6. The yarn according to any preceding claim wherein said lubricant further comprises a wetting agent.

7. The yarn according to any preceding claim wherein said lubricant further comprises a UV dye.

8. The yarn according to any preceding claim wherein said polymer binder is a polyamide or a polyurethane binder.

9. The yarn according to any preceding claim wherein said solid particles are selected from a group consisting of metal oxides, molybdene disulphide, PTFE, graphite.

10. The yarn according to any preceding claim, wherein said metal fibers (140) are stainless steel fibers.

11. The yarn according to any of the claims 1 to 9, wherein said metal fibers (140) comprise a copper or aluminium core and a stainless steel mantle.

12. Use of a yarn according to any of the preceding claims for heating applications.

13. Heating element for a car seat (400) comprising a yarn (412) according to any of the claims 1 to 11.

14. Textile product comprising at least one yarn according to any of the claims 1 to 11.

## Patentansprüche

1. Garn (100,412) für Autositzheizung, welches ein oder mehrere Bündel (110,120,130) beinhaltet, wobei jedes Bündel (110,120,130) mindestens 10 Metallfasern (140) beinhaltet, wobei besagtes Garn (100) verdrillt ist, **dadurch gekennzeichnet, dass** besagtes Garn (100) ein lösungsmittelhaltiges Schmiermittel beinhaltet, wobei besagtes Schmiermittel ein polymeres Bindemittel und Feststoffpartikel enthält.

2. Garn nach Anspruch 1, wobei besagte Metallfasern (140) einzeln oder als Bündel gezogen sind.

3. Garn nach Anspruch 1 oder Anspruch 2, wobei besagtes Garn (100) eine vorbestimmte Anzahl von Windungen pro Meter beinhaltet, wobei besagte vorbestimmte Anzahl von Windungen pro Meter kleiner als 80 pro Meter und größer als 10 pro Meter ist.

4. Garn nach Anspruch 3, wobei besagte vorbestimmte Anzahl von Windungen pro Meter kleiner als 60 pro Meter und größer als 30 pro Meter ist.

5. Garn nach einem der vorhergehenden Ansprüche, wobei besagtes Schmiermittel weiterhin ein Additiv zur Unterbindung von Korrosion beinhaltet.

6. Garn nach einem der vorhergehenden Ansprüche, wobei besagtes Schmiermittel weiterhin ein Benetzungsmittel beinhaltet.

7. Garn nach einem der vorhergehenden Ansprüche, wobei besagtes Schmiermittel weiterhin einen UV-Farbstoff beinhaltet.

8. Garn nach einem der vorhergehenden Ansprüche, wobei besagtes polymeres Bindemittel ein Polyamid- oder Polyurethan-basiertes Bindemittel ist.

9. Garn nach einem der vorhergehenden Ansprüche, wobei besagte Feststoffpartikel aus einer Gruppe bestehend aus Metalloxiden, Molybdändisulfid, Polytetrafluorethylen, Graphit ausgewählt werden.

10. Garn nach einem der vorhergehenden Ansprüche, wobei besagte Metallfasern (140) Edelstahlfasern sind.

11. Garn nach einem der Ansprüche 1 bis 9, wobei besagte Metallfasern (140) einen Kupfer- oder Aluminiumkern und einen Edelstahlmantel beinhalten.

12. Verwendung eines Garns nach einem der vorhergehenden Ansprüche für Heizungsanwendungen.

13. Heizelement für einen Autositz (400), welches ein Garn (412) nach einem der Ansprüche 1 bis 11 beinhaltet.

14. Textilprodukt, welches mindestens ein Garn nach einem der Ansprüche 1 bis 11 beinhaltet.

## Revendications

1. Fil (100, 412) pour le chauffage d'un siège de voiture, comprenant un ou plusieurs faisceaux (110, 120, 130), chaque faisceau (110, 120, 130) comprenant au moins dix fibres métalliques (140), ledit fil (100) étant torsadé,
**caractérisé en ce que**
ledit fil (100) comprend un lubrifiant à base d'un solvant, ledit lubrifiant comprenant un liant polymère et des particules solides.

2. Fil selon la revendication 1, dans lequel lesdites fibres métalliques (140) sont tréfilées individuellement ou en faisceau.

3. Fil selon la revendication 1 ou 2, dans lequel ledit fil (100) comprend un nombre prédéterminé de torsions par mètre, ledit nombre prédéterminé de torsions par mètre étant inférieur à 80 par mètre et supérieur à 10 par mètre.

4. Fil selon la revendication 3, dans lequel ledit nombre prédéterminé de torsions par mètre est inférieur à 60 par mètre et supérieur à 30 par mètre.

5. Fil selon l'une quelconque des revendications précédentes, dans lequel ledit lubrifiant comprend en outre un additif pour inhiber la corrosion.

6. Fil selon l'une quelconque des revendications précédentes, dans lequel ledit lubrifiant comprend en outre un agent mouillant.

7. Fil selon l'une quelconque des revendications précédentes, dans lequel ledit lubrifiant comprend en outre un colorant UV.

8. Fil selon l'une quelconque des revendications précédentes, dans lequel ledit liant polymère est un polyamide ou un liant de polyuréthanne.

9. Fil selon l'une quelconque des revendications précédentes, dans lequel lesdites particules solides sont choisies dans le groupe constitué des oxydes de métaux, du disulfure de molybdène, du PTFE et du graphite.

10. Fil selon l'une quelconque des revendications précédentes, dans lequel lesdites fibres métalliques (140) sont des fibres en acier inoxydable.

11. Fil selon l'une quelconque des revendications 1 à 9, dans lequel lesdites fibres métalliques (140) comprennent un noyau en cuivre ou en aluminium et une gaine en acier inoxydable.

12. Utilisation d'un fil selon l'une quelconque des revendications précédentes pour des applications de chauffage.

13. Elément de chauffage pour un siège de voiture (400), comprenant un fil (412) selon l'une quelconque des revendications 1 à 11.

14. Produit textile comprenant au moins un fil selon l'une quelconque des revendications 1 à 11.
